# EUROPEAN PATENT SPECIFICATION

(11) **EP 1 144 086 B1**
(45) Date of publication and mention of the grant of the patent: **07.01.2004**
(21) Application number: 99929528.0
(22) Date of filing: 01.07.1999
(51) Int. Cl.: B01D 53/00

(54) **AIR DRYER FOR A VEHICLE**
LUFTTROCKNER FÜR EIN FAHRZEUG
DESSICCATEUR D'AIR POUR VEHICULE

(30) Priority: 02.07.1998 GB 9814254
(43) Date of publication of application: 17.10.2001
(73) Proprietor: WABCO AUTOMOTIVE U.K. LIMITED, Morley, Leeds, LS27 0HQ (GB)
(72) Inventor: TOWNSEND, David H., Wakefield, West Yorkshire WF3 1ET (GB)
(74) Representative: Gray, James
(86) International application number: PCT/GB1999/002094
(87) International publication number: WO 2000/001466

(56) References cited:
- DE-A- 3 139 682
- FR-A- 2 082 546
- PATENT ABSTRACTS OF JAPAN vol. 010, no. 120 (C-343), 6 May 1986 (1986-05-06) & JP 60 244323 A (NIPPON AIR BRAKE KK), 4 December 1985 (1985-12-04)
- DATABASE WPI Section Ch, Week 199111 Derwent Publications Ltd., London, GB; Class J01, AN 1991-079979 XP002119010 & SU 1 579 542 A (BORSK STEKLOAVTOMAT), 23 July 1990 (1990-07-23)
- DATABASE WPI Section Ch, Week 198214, Derwent Publications Ltd., London, GB; Class J01, AN 1982-28153E, XP002119011 & SU 837 383 A (VOROSH DIESEL PROD) 15 June 1981

## Description

The invention relates to an air dryer for a vehicle and is particularly, but not exclusively, concerned with a dryer for extracting moisture from air used in a commercial vehicle braking system.

A typical commercial vehicle air brake system comprises a compressor and a dryer upstream of the brakes for extracting moisture from the compressed air by means of a bed of desiccant. The dried air then normally passes to one or more air reservoirs for use in operation of the service brake. Once there is sufficient compressed air in the reservoir, the compressor will normally idle, for example by opening an exhaust valve on the compressor, until there is demand for further air to be pumped to the reservoir.

It is necessary from time to time to dry out the bed of desiccant and the drying step is normally performed while the compressor is idling. To dry the desiccant at least partially, a small volume of dry compressed air from the reservoir is fed back through the dryer. In practice, only a relatively small volume of dry air from the reservoir is required to reduce moisture in the desiccant bed to a reasonable level. Obviously, if larger volumes of air were passed through the dryer a more significant reduction in moisture could be achieved. However, there is a practical limit to the amount of air that can be withdrawn from the reservoir without having to take the compressor out of idle mode and, ideally it would be useful if the desiccant could be dried to a greater extent using the quantities of air which are presently available. As an added benefit, it would be possible to reduce the amount of desiccant used in the dryer if the drying could be carried out more efficiently.

FR 2082546 discloses a drying arrangement wherein heating of the drying media is made possible. The drying media is housed within a canister having a recess within which a plurality of electric heater elements are received. The heater elements are utilised to heat by radiation a plurality of fins extending through the drying media.

An object of the present invention is to provide an improved form of air dryer with the above advantages in mind.

According to one aspect of the invention, there is provided an air dryer for a vehicle air system, the air dryer having a cartridge containing said drying media and heating means for heating said drying media, whereby said heating means are mounted on said cartridge.

By providing a heating means, additional moisture is driven out of the drying media into the air whereby the volume of air used for drying carries off a greater quantity of moisture than from non-heated drying media.

According to a further aspect of the invention there is provided a method of drying a drying media in an air dryer of a vehicle, the vehicle being provided with a reservoir to receive air from a compressor, and an air dryer between the compressor and the reservoir for drying the air received from the compressor, the method comprising the steps of:
providing said drying media in a cartridge of said air dryer, said cartridge having heating means mounted thereon;
periodically heating said cartridge containing the drying media; and
permitting at intervals reverse flow of dried air from the reservoir to the drying media whilst the drying media is hot.

In the preferred embodiment, heat is applied by the heating means either for a predetermined period of time or for a period of time dependent upon the level of moisture sensed by sensor means arranged in the dryer.

An electronic control unit (ECU) may be provided on the vehicle for controlling the compressor and the heating of the drying media. For example, when drying of the drying media becomes necessary, the ECU detects that the compressor is in idle mode and then signals the onset of heating of the drying media whilst also permitting a quantity of dried air from the reservoir to pass back through the dryer. After a set period of time or once a predetermined low level of moisture has been reached, the ECU switches off the heater. If the compressor is brought back on load, the heating/drying cycle is terminated.

Heating and regeneration flow may occur substantially simultaneously. Alternatively heating occurs before regeneration flow. This latter arrangement permits the regeneration flow to be over a relatively short period, thus reducing the risk that a compressor demand signal will cause the heating/regeneration cycle to be terminated.

Direct heating of moist desiccant can be rapid because the heat transfer coefficient is high. Such an arrangement has consequent advantages over regeneration systems which rely on pre-heating of regeneration air, typically because the heat transfer coefficient of dry air is relatively low.

In a preferred embodiment. the air dryer is arranged in a braking circuit of a vehicle. In such a case, drying of the drying media preferably takes place during a period that the brakes of the vehicle are not being applied. Where the ECU is provided, the ECU is preferably intelligent, and senses when the brakes are being applied and does not then allow air in the braking system being used to dry the drying media. A suitable sensor may be the existing brake light circuit which is generally energised momentarily before the vehicle brake demand compressed air.

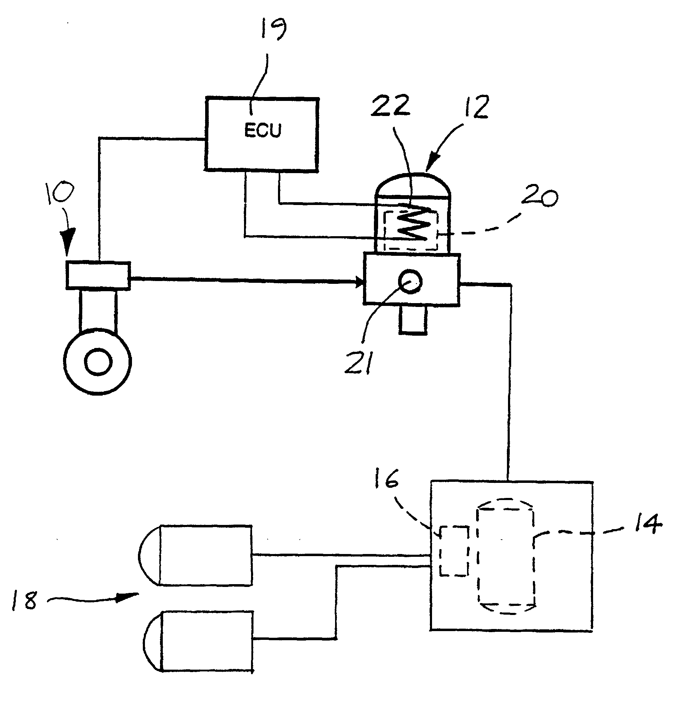

An air dryer in accordance with the invention will now be described by way of example with reference to the accompanying drawing which is a diagrammatic view of a vehicle air braking system incorporating an air dryer in accordance with the invention.

The air braking system comprises a compressor 10 connected to an air dryer 12 which, in turn. is connected to a reservoir 14 and distribution arrangement 16 for operation of vehicle brakes indicated generally at 18. The compressor 10 is controlled by an electronic control unit ( ECU) 19 in response to sensed signals.

The air dryer 12 contains a cartridge of drying media 20 such as desiccant of known kind for drying air passing from the compressor to the reservoir 14. An electric heater 22 is provided for heating the drying media in the air dryer. The heater 22 is a heating element mounted on the cartridge containing the drying media 20, for example a resistance film wound around the drying media.

The heater 22 is powered by a suitable source such a a battery on the vehicle or an electrical generator. Vehicles with air braking systems typically have a very large battery for the purpose of starting the usual diesel engine. The full capacity of such a battery is not usually required whilst the vehicle is running, and thus a substantial source of energy is available for the heater 22. This source can provide rapid heating, and thus regeneration time of the dryer is not substantially increased. The vehicle battery can be recharged from the vehicle generator over a period of time and consequently an additional source of energy for the heater is not required. There will be a small increase in vehicle fuel consumption due to the replacement of stored energy in the battery, but pre-heating of any kind has an inevitable energy cost.

From time to time it is necessary to purge the drying media 20 of moisture in order to ensure continued adequate drying of the air In order to do that. the ECU 19 senses when the compressor 10 is in an idle mode. The ECU may also sense when the vehicle brake lights are off to indicate that the brakes are not in use. To idle the compressor 10, the ECU 19 may cause an exhaust valve on the compressor to be opened so that it no longer delivers air to the reservoir 14. Previously dried air is then permitted to flow back from the reservoir 14 towards the dryer 12 and passes through the drying media 20, the air carrying moisture from the drying media finally escaping via a valve (not shown) through an outlet 21 in air dryer 12 to atmosphere. The valve permits air to flow from the reservoir 14 through the outlet when air is not being fed under pressure form the compressor 10. At the same time the ECU 19 switches on the heater 22, to heat the drying media 20.

The ECU 19 can be set to permit drying to take place at given intervals and for a set period of time. Alternatively, a moisture sensor (not shown) can be provided which will indicate to the ECU 19 the level of moisture in the drying media 20. In the latter case, the ECU 19 will switch the system into drying mode when required and switch the system back to normal mode when the sensor indicates that moisture has been reduced sufficiently.

Typically, the drying media will be heated to a predetermined temperature prior to dry air being passed through the media for regeneration. The heating element may be under thermostatic control.

The combined effect of heating the drying media 20 and passing dried air through the drying media simultaneously has a markedly improved drying effect than when dried air alone is used to purge the drying media 20 of moisture. In that way, more effective use is made of a given volume of previously dried air than in known arrangements where there is no heating of the drying media 20. Therefore it is envisaged that smaller quantities of drying media can be used in the manufacture of drying media cartridges as drying is more efficient. Clearly, that is advantageous from the point of view of cost, especially where the drying media is contained in a replaceable cartridge.

Usually, the drying media 20 will not be completely purged of moisture during the drying mode but the level of moisture will be sufficiently reduced to effect adequate drying of the air subsequently fed from the compressor 10 to the reservoir 14.

Whilst specific reference has been made to the operation of brakes of the vehicle, it will be understood that the reservoir may feed other air consumers on the vehicle such as windscreen wipers.

A twin chamber air dryer may be provided in the alternative. In such a system, dry air from a purge reservoir may be used to dry a heated desiccant bed whilst the compressor remains on load. and supplying air to the system through a parallel desiccant bed. Means, such as a timer, is used to switch the air between the desiccant beds to allow periodic drying Such a system is useful for vehicles where the air demand is more or less continual, e.g. on city buses.

## Claims

1. An air dryer (12) for a vehicle air system, the air dryer (12) having a cartridge containing a drying media (20) and heating means for heating said drying media (20), whereby said heating means are mounted on said cartridge.

2. An air dryer (12) as claimed in claim 1 wherein the heating means comprises a resistance film.

3. An air dryer (12) as claimed in any preceding claim wherein the heating means is powered by a vehicle electrical system including a battery.

4. An air dryer (12) as claimed in any preceding claim and including sensor means to sense the moisture level of the drying media.

5. An air dryer (12) as claimed in any preceding claim and including a timer to determine the period of activation of said heating means.

6. A method of drying a drying media (20) in an air dryer (12) of a vehicle, the vehicle being provided with a reservoir (14) to receive air from a compressor (10), and an air dryer (12) between the compressor (10) and the reservoir (14) for drying the air received from the compressor (10), the method comprising the steps of:
providing said drying media (20) in a cartridge of said air dryer (12), said cartridge having heating means mounted thereon;
periodically heating said cartridge containing the drying media (20); and
permitting at intervals reverse flow of dried air from the reservoir (14) to the drying media whilst the drying media is hot.

7. A method as claimed in claim 6 wherein the drying media (20) is heated for a predetermined period of time.

8. A method as claimed in claim 7 wherein said period of time is dependent upon the moisture level of the drying media (20).

9. A method as claimed in claim 8 and including the step of sensing the moisture level of the drying media (20) prior to heating the drying media (20).

10. A method as claimed in any of claims 6 to 9 including the preparatory step of determining that the compressor (10) is off load.

11. A method according to claim 10 and including the further step of suspending said reverse flow if the compressor (10) is brought on-load.

## Patentansprüche

1. Lufttrockner (12) für ein Luftsystem eines Fahrzeugs, wobei der Lufttrockner (12) einen Einsatzbehälter, welcher ein Trocknungsmittel (20) enthält, und eine Erwärmungseinrichtung zum Erwärmen des Trocknungsmittels (20) aufweist, wobei die Erwärmungseinrichtung an dem Einsatzbehälter angebracht ist.

2. Lufttrockner (12) nach Anspruch 1, wobei die Erwärmungseinrichtung einen Widerstandsfilm umfaßt.

3. Lufttrockner (12) nach einem vorangehenden Anspruch, wobei die Erwärmungseinrichtung durch ein elektrisches System eines Fahrzeugs, welches eine Batterie umfaßt, mit Energie versorgt wird.

4. Lufttrockner (12) nach einem beliebigen vorangehenden Anspruch, ferner umfassend eine Sensoreinrichtung zum Erfassen des Feuchtigkeitsniveaus des Trocknungsmittels.

5. Lufttrockner (12) nach einem beliebigen vorangehenden Anspruch, ferner umfassend einen Zeitgeber zum Bestimmen der Betätigungszeit der Erwärmungseinrichtung.

6. Verfahren zum Trocknen eines Trocknungsmittels (20) in einem Lufttrockner (12) eines Fahrzeugs, wobei das Fahrzeug mit einem Speicher (14) zum Aufnehmen von Luft von einem Kompressor (10) und einem Lufttrockner (12) zwischen dem Kompressor (10) und dem Speicher (14) versehen ist, um die von dem Kompressor (10) aufgenommene Luft zu trocknen, wobei das Verfahren die Schritte umfaßt:
Verwenden des Trocknungsmittels (20) in einem Einsatzbehälter des Lufttrockners (12), wobei der Einsatzbehälter eine Erwärmungseinrichtung aufweist, welche daran angebracht ist;
periodisches Erwärmen des Einsatzbehälters, welcher das Trocknungsmittel (20) enthält; und
Ermöglichen eines Rückflusses getrockneter Luft aus dem Speicher (14) zu dem Trocknungsmittel in Intervallen, während das Trocknungsmittel warm ist.

7. Verfahren nach Anspruch 6, wobei das Trocknungsmittel (20) in einer vorbestimmten Zeitperiode erwärmt wird.

8. Verfahren nach Anspruch 7, wobei die Zeitperiode von dem Feuchtigkeitsniveau des Trocknungsmittels (20) abhängig ist.

9. Verfahren nach Anspruch 8, ferner umfassend den Schritt des Erfassens des Feuchtigkeitsniveaus des Trocknungsmittels (20) vor dem Erwärmen des Trocknungsmittels (20).

10. Verfahren nach einem der Ansprüche 6 bis 9, umfassend den Vorbereitungsschritt des Entscheidens, daß der Kompressor (10) unbelastet ist.

11. Verfahren nach Anspruch 10, ferner umfassend den Schritt des Unterbrechens des Rückflusses, wenn der Kompressor (10) belastet wird.

## Revendications

1. Un dessiccateur d'air (12) pour un système de ventilation de véhicule, le dessiccateur (12) possédant une cartouche contenant un agent dessiccateur (20) et des moyens de chauffage pour le chauffage de cet agent dessiccateur (20) **caractérisé en ce que** ces moyens de chauffage sont montés sur la cartouche.

2. Un dessiccateur d'air (12) selon la revendication 1 **caractérisé en ce que** les moyens de chauffage comprennent un film résistif.

3. Un dessiccateur d'air (12) selon l'une quelconque des revendications précédentes **caractérisé en ce que** les moyens de chauffage sont alimentés par un système électrique de véhicule comportant une batterie.

4. Un dessiccateur d'air (12) selon l'une quelconque des revendications précédentes **caractérisé en ce qu'**il comprend un moyen de capteur pour détecter le degré d'humidité de l'agent dessiccateur.

5. Un dessiccateur d'air (12) selon l'une quelconque des revendications précédentes **caractérisé en ce qu'**il comprend un minuteur pour déterminer le temps de fonctionnement des moyens de chauffage.

6. Procédé de dessiccation par un agent dessiccateur (20) dans un dessiccateur d'air (12) d'un véhicule, le véhicule étant équipé d'un réservoir (14) pour recevoir de l'air d'un compresseur (10) et un dessiccateur d'air (12) entre le compresseur (10) et le réservoir (14) pour assécher l'air reçu du compresseur, le procédé étant **caractérisé en ce qu'**il se compose des étapes de :
. obtenir cet agent dessiccateur (20) dans une cartouche de ce dessiccateur d'air (12), sur cette cartouche étant montés des moyens de chauffage,
. chauffer périodiquement cette cartouche contenant l'agent dessiccateur(20) et,
. permettre à intervalles, d'inverser du réservoir à l'agent dessiccateur, le flux de l'air asséché pendant que l'agent dessiccateur est chaud.

7. Procédé selon la revendication 6 **caractérisé en ce que** l'agent dessiccateur (20) est chauffé pendant une durée prédéterminée.

8. Procédé selon la revendication 7 **caractérisé en ce que** cette durée dépend du degré d'humidité de l'agent dessiccateur.

9. Procédé selon la revendication 8 **caractérisé en ce qu'**il comprend l'étape de détection du degré d'humidité de l'agent dessiccateur (20) avant le chauffage de l'agent dessiccateur.

10. Procédé selon l'une quelconque des revendications 6 à 9 **caractérisé en ce qu'**il comprend l'étape initiale de détermination de l'état hors charge du compresseur.

11. Procédé selon la revendication 10 **caractérisé en ce qu'**il comprend l'étape supplémentaire d'interrompre temporairement ce flux inversé dans le cas où le compresseur est mis en charge.
